# EUROPEAN PATENT SPECIFICATION

(11) **EP 4 356 992 B1**
(45) Date of publication and mention of the grant of the patent: **08.07.2026**
(21) Application number: 23203165.8
(22) Date of filing: 12.10.2023
(51) Int. Cl.: A63F 13/98

(54) **CRADLE AND SYSTEM INCLUDING CRADLE AND INPUT DEVICE**
WIEGE UND SYSTEM MIT WIEGE UND EINGABEVORRICHTUNG
BERCEAU ET SYSTÈME COMPRENANT UN BERCEAU ET UN DISPOSITIF D'ENTRÉE

(30) Priority: 18.10.2022 JP 2022167039
(43) Date of publication of application: 24.04.2024
(73) Proprietor: Sony Interactive Entertainment Inc., Tokyo 108-0075 (JP)
(72) Inventor: KOBAYASHI, Ikuo, Tokyo, 108-0075 (JP); IGARASHI, Takeshi, Tokyo, 108-0075 (JP); OTA, Masataka, Tokyo, 108-0075 (JP); UCHIDA, Nozomu, Tokyo, 108-0075 (JP)
(74) Representative: Fish & Richardson P.C.

(56) References cited:
- TW-S- D 227 522
- TECH WE WANT: "Best Charging Docks for Oculus Quest 2 - Anker vs Smatree!", 10 January 2022 (2022-01-10), XP093139232, Retrieved from the Internet <URL:https://www.youtube.com/watch?v=1RkYElX6oa4> [retrieved on 20240308]

## Description

### CROSS REFERENCE TO RELATED APPLICATIONS

This application claims the benefit of Japanese Priority Patent Application JP 2022-167039 filed October 18, 2022.

### BACKGROUND

This disclosure relates to a cradle and a system including a cradle and an input device.

There is a technique of tracking the position and the posture of an input device by providing light emitting parts in the input device and detecting the light emitting parts with a camera. PCT Patent Publication No. WO2021/240930 below discloses an input device for game operation. The input device has a grip and a curved tracked part extending from the grip. The tracked part is provided with a plurality of light emitting parts. The input device is captured, for example, by a camera mounted on a head-mounted display that the user wears on the head, and the position and the posture of the input device are calculated from the image.
An exemplary cradle for input devices is as well shown in a YouTube video: "Tech We Want: 'Best Charging Docks for Oculus Quest 2 - Anker vs Smatree!'", 10 January 2022, available under https://www.youtube.com/watch?v=1RkYEIX6oa4.

### SUMMARY

When the input device is not used, a cradle is sometimes used to support the input device. Even for the input device as described in PCT Patent Publication No. WO2021/240930, it may be required to stably support the entire input device, including the tracked part.

The problems with the prior art are solved by the subject-matter of the independent claims.

An example of a cradle according to an embodiment of the present disclosure supports input devices having grips and tracked parts extending from the grips. The cradle has rear support parts that are capable of supporting the rear parts of the grips, front support parts that are positioned forward away from the rear support parts and are capable of supporting the front parts of the grips of the input devices, and side support parts that are positioned outside in the left-right direction with respect to the rear support parts and the front support parts and are capable of supporting the tracked parts. According to this cradle, it is possible to stably support the input devices.

Another example of a cradle according to an embodiment of the present disclosure supports input devices having grips and tracked parts extending from the grips. The cradle has rear support parts that are capable of supporting the rear parts of the grips, and side support parts that are positioned outside in a left-right direction with respect to the rear support parts, are curved in such a manner as to swell outward in the left-right direction in plan view, and support the tracked parts. This cradle is also able to stably support the input devices.

### BRIEF DESCRIPTION OF THE DRAWINGS

FIG. 1 is a perspective view for illustrating an example of a cradle according to an embodiment of the present disclosure;
FIG. 2 is a plan view of the cradle illustrated in FIG. 1;
FIG. 3 is a side view of the cradle illustrated in FIG. 1;
FIG. 4 is a rear view of the cradle illustrated in FIG. 1;

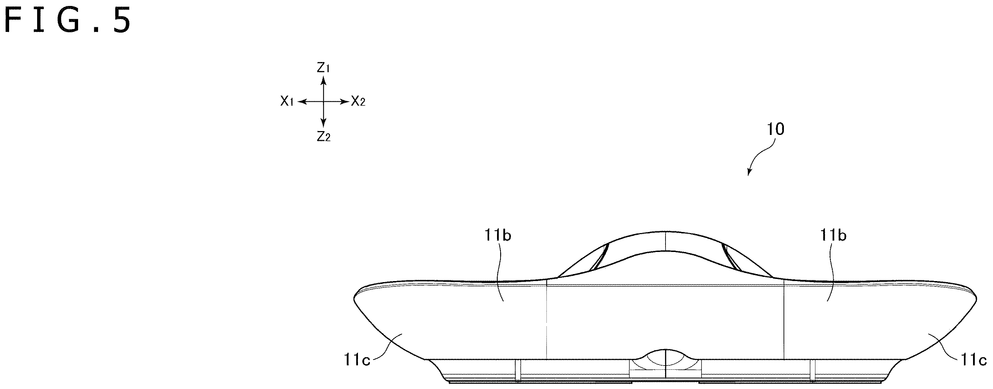

FIG. 5 is a front view of the cradle illustrated in FIG. 1;
FIG. 6 is a perspective view of a system including the cradle illustrated in FIG. 1 and input devices;
FIG. 7 is a plan view of the system illustrated in FIG. 6;
FIG. 8 is a side view of the system illustrated in FIG. 6;
FIG. 9 is a rear view of the system illustrated in FIG. 6;
FIG. 10 is a front view of the system illustrated in FIG. 6;
FIG. 11 is a cross-sectional view taken along line XI-XI illustrated in FIG. 8;
FIG. 12 is a cross-sectional view taken along line XII-XII illustrated in FIG. 10;
FIG. 13 is a cross-sectional view of the system taken along line XIII-XIII illustrated in FIG. 2;
FIG. 14 is a perspective view of the input device; and
FIG. 15 is a perspective view of an adapter.

### DETAILED DESCRIPTION OF THE PREFERRED EMBODIMENT

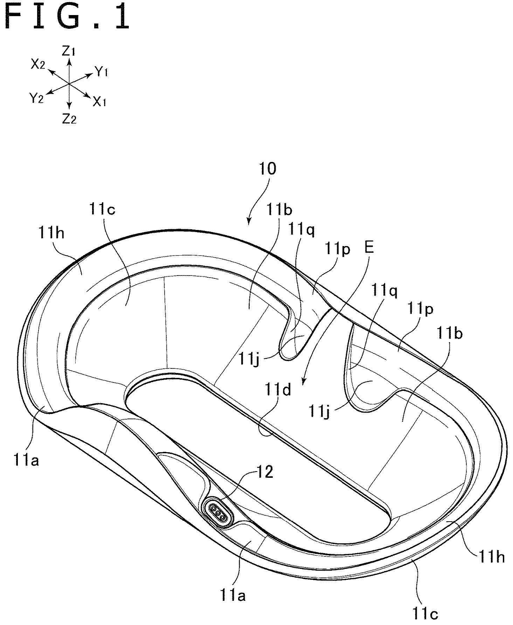

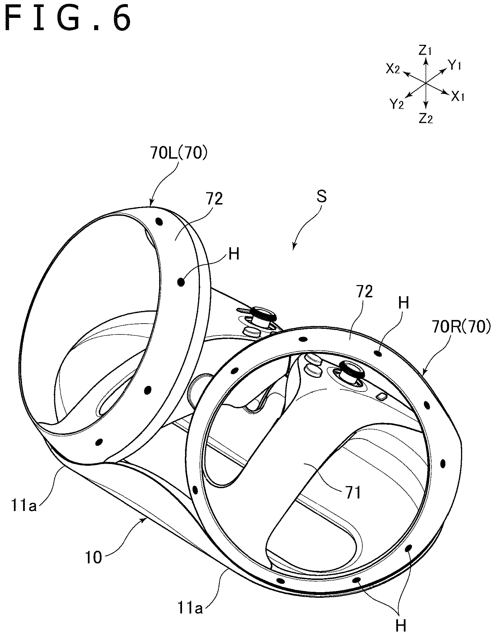

Hereinafter, a cradle according to an embodiment of the present disclosure and a system including the cradle and an input device will be described with reference to the drawings. In an embodiment of the present disclosure, a cradle 10 (see FIG. 1) and a system S (see FIG. 6) will be described as an example of these.

In the following, Y1 and Y2 directions illustrated in FIG. 1 and other figures will be referred to as front and rear, respectively, X1 and X2 directions will be referred to as right and left, respectively, and Z1 and Z2 directions will be referred to as upper and lower, respectively.

### [Outline of input device]

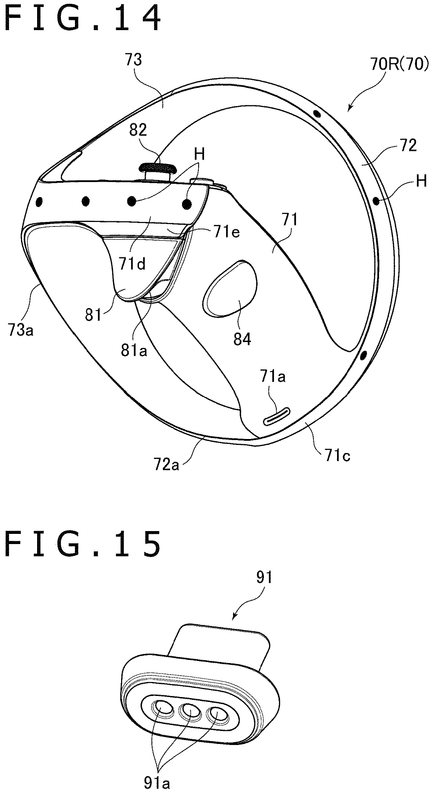

As illustrated in FIG. 6, the system S includes an input device 70R for the right hand and an input device 70L for the left hand. They have a substantially symmetrical external shape. In the following description common to these two input devices 70R and 70L, a reference sign "70" is used for the two input devices. As illustrated in FIG. 14, the input device 70 has a grip 71 for the user to grip with one hand and tracked parts 72 and 73 extending from the grip 71.

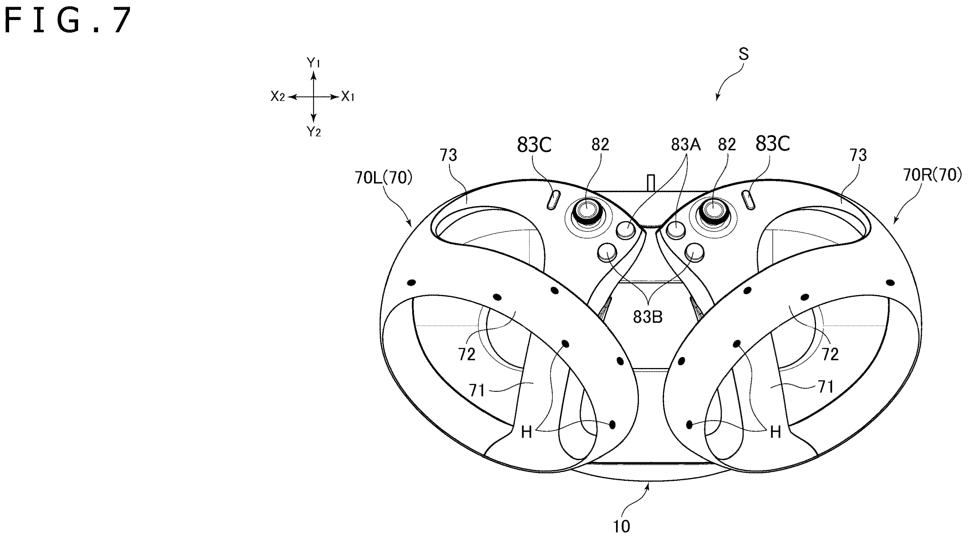

As illustrated in FIG. 14, the grip 71 has a plurality of operation members on the upper part (front part) thereof for the user to move with the fingers. For example, a trigger button 81 is arranged on the front side of the upper part of the grip 71. In addition, on the upper surface of the upper part of the grip 71, an operation stick 82 and operation buttons 83A, 83B, and 83C (see FIG. 7) are provided. Further, the grip 71 may have a side button 84 (see FIG. 14) in the middle thereof.

As illustrated in FIG. 14, a terminal 71a may be provided at the lower part (rear part) of the grip 71. The terminal 71a may be, for example, a terminal for charging a battery incorporated in the input device 70. The terminal 71a may be provided, for example, on the front side of the lower part of the grip 71.

As illustrated in FIG. 6, the input devices 70 have a plurality of light emitting parts H on the outer surface thereof. The light emitting parts H are arranged on the surfaces of the tracked parts 72 and 73. A light emitting element (specifically, a light emitting diode) may be arranged at the position of each light emitting part H. The input devices 70 are imaged by a camera mounted on a head-mounted display mounted on the head of the user. The positions and the postures of the input devices 70 are calculated in reference to the positions and the sizes of the light emitting parts H appearing in the image. The calculation may be executed in the head-mounted display itself or an information processing device communicating with the head-mounted display.

As illustrated in FIG. 7, the input devices 70 have rear tracked parts 72. In addition, the input devices 70 may have side tracked parts 73. The rear tracked parts 72 are connected to the lower parts (rear parts) of the grips 71. The rear tracked parts 72 may be, for example, annular. When the input devices 70 are viewed from the rear side, the grips 71 are positioned inside the rear tracked parts 72. The user can operate the input devices 70 by inserting the hands inside the rear tracked parts 72 and gripping the grips 71.

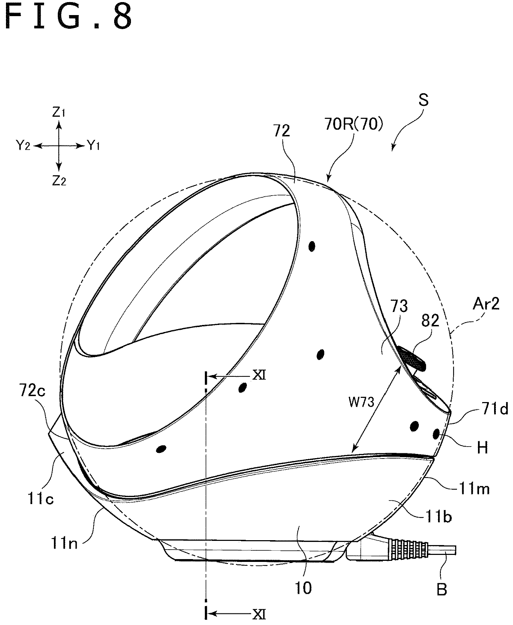

As illustrated in FIG. 7, the side tracked parts 73 are positioned outside in the left-right direction with respect to the grips 71. Specifically, in the input device 70R for the right hand, the side tracked part 73 is positioned to the right with respect to the grip 71. In addition, in the input device 70L for the left hand, the side tracked part 73 is positioned to the left with respect to the grip 71. The side tracked parts 73 extend outward in the left-right direction from the upper parts (front parts) of the grips 71, are curved rearward, and are connected to the side parts of the rear tracked parts 72. As illustrated in FIG. 8, the width W73 of the side tracked part 73 may gradually increase as it approaches the rear tracked part 72 in the side view of the input device 70.

The shapes of the tracked parts 72 and 73 are not limited to the examples illustrated in the drawings. For example, the side tracked parts 73 are connected to the grips 71, but need not be connected to the rear tracked parts 72. On the contrary, the side tracked parts 73 are connected to the rear tracked parts 72, but need not be connected to the grips 71. As yet another example, the rear tracked parts 72 need not be annular. For example, the rear tracked parts 72 may be arc-shaped.

### [Cradle]

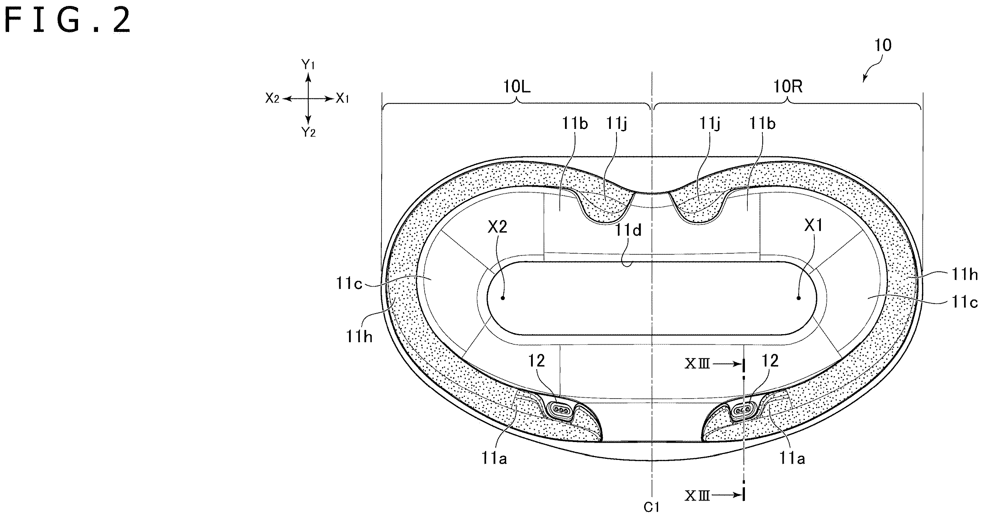

As illustrated in FIG. 2, the cradle 10 has a cradle right part 10R for supporting the input device 70R for the right hand and a cradle left part 10L for supporting the input device 70L for the left hand. The cradle right part 10R and the cradle left part 10L have a symmetrical shape with respect to a center line C1 in the left-right direction of the cradle 10.

As illustrated in FIG. 1, each of the cradle right part 10R and the cradle left part 10L has a rear support wall 11a capable of supporting the rear part (lower part) of the grip 71 and a front support wall 11b positioned forward away from the rear support wall 11a and capable of supporting the front part (upper part) of the grip 71. In addition, each of the cradle right part 10R and the cradle left part 10L has a side support wall 11c positioned outside in the left-right direction with respect to the front support wall 11b and the rear support wall 11a and capable of supporting the tracked parts 72 and 73. That is, the cradle right part 10R has the side support wall 11c positioned to the right with respect to the front support wall 11b and the rear support wall 11a. The cradle left part 10L has the side support wall 11c positioned to the left with respect to the front support wall 11b and the rear support wall 11a. According to this structure of the cradle 10, the input devices 70 can be stably supported.

As illustrated in FIG. 1, a recessed part E is formed between the rear support walls 11a and the front support walls 11b. The recessed part E is formed inside the front support wall 11b, the rear support wall 11a, and the side support wall 11c of the cradle right part 10R and inside the front support wall 11b, the rear support wall 11a, and the side support wall 11c of the cradle left part 10L. One recessed part E is formed across the cradle right part 10R and the cradle left part 10L. When the cradle 10 supports the input devices 70, the grips 71 are positioned inside the recessed part E in plan view. Accordingly, the user can place the input devices 70 on the cradle 10 or remove them from the cradle 10 while holding the grips 71.

As illustrated in FIG. 1, an opening 11d is formed at the bottom part of the recessed part E. The opening 11d penetrates the bottom part of the cradle 10. According to this structure, it is possible to effectively suppress interference between the bottom part of the cradle 10 and the user's hands when the user places the input devices 70 on the cradle 10 while holding the grips 71. In the example illustrated in the drawing, one opening 11d, which is elongated in the left-right direction, is formed across the cradle right part 10R and the cradle left part 10L. Unlike this, an opening may be formed in each of the cradle right part 10R and the cradle left part 10L.

As illustrated in FIG. 2, the side support walls 11c are curved in such a manner as to swell outward in the left-right direction in plan view of the cradle 10. That is, the side support wall 11c on the right side is curved in such a manner as to swell to the right, and the side support wall 11c on the left side is curved in such a manner as to swell to the left. The tracked parts 72 and 73 are also curved, and the side support walls 11c are curved along the tracked parts 72 and 73. With this structure, the cradle 10 can more stably support the tracked parts 72 and 73.

The side support walls 11c are connected to the front support walls 11b and the rear support walls 11a. That is, the side support walls 11c extend from the rear support walls 11a to the front support walls 11b while being curved. According to this, a wide range of the tracked parts 72 and 73 can be supported, and the support stability of the input devices 70 can be further improved.

As illustrated in FIG. 2, the rear support walls 11a, the side support walls 11c, and the front support walls 11b may roughly form a semicircle as a whole. That is, the support walls 11a, 11c, and 11b of the cradle right part 10R are curved about a point X1 defined to the right with respect to the center line C1 of the cradle 10. The support walls 11a, 11c, and 11b of the cradle left part 10L are curved about a point X2 defined to the left with respect to the center line C1 of the cradle 10. Further, the front support wall 11b of the cradle right part 10R and the front support wall 11b of the cradle left part 10L are connected to each other. The rear support wall 11a of the cradle right part 10R and the rear support wall 11a of the cradle left part 10L are also connected to each other. The support walls 11a, 11c, and 11b of the cradle right part 10R and the support walls 11a, 11c, and 11b of the cradle left part 10L have an annular shape elongated in the left-right direction as a whole. They may have a bowl shape opened upward as a whole.

The support walls 11a, 11c, and 11b are arranged along a front surface 71d of the grip 71 (FIG. 14), a lower edge 73a of the side tracked part 73 (FIG. 14), a front edge 72a of the lowermost part of the rear tracked part 72 (FIG. 14), and a rearmost part 71c of the grip 71 (FIG. 14).

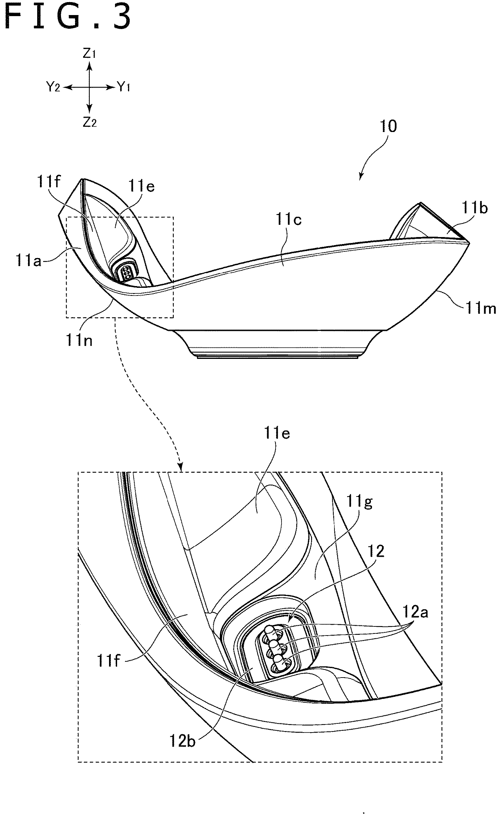

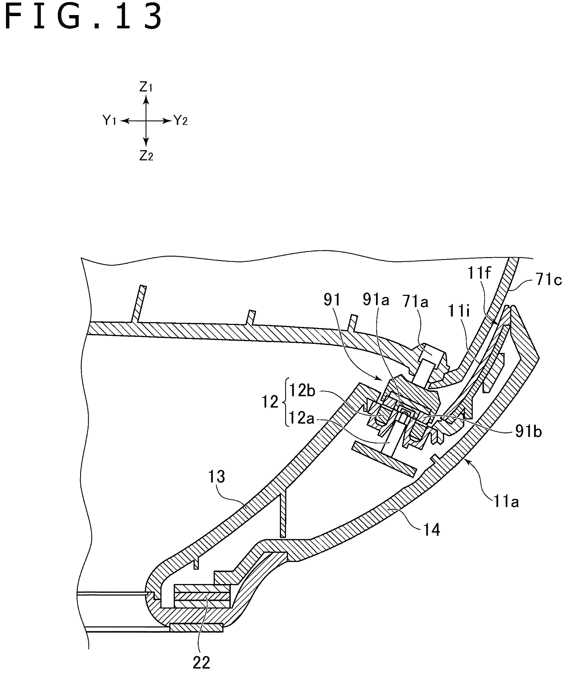

As illustrated in FIG. 3, a terminal part 12 is formed on the rear support wall 11a to electrically connect to the terminal 71a provided at the rear part of the grip 71. The terminal part 12 may be provided with a plurality of terminals 12a and a magnet 12b. Meanwhile, an adapter 91 (see FIG. 15) may be attached to the terminal 71a of the input device 70. The adapter 91 has a plurality of terminals 91a and a magnetic body 91b (see FIG. 13). The adapter 91 is attached to the terminal part 12 by magnetic force. Further, the terminals 12a of the terminal part 12 (see FIG. 3 and FIG. 13) and the terminals 71a of the input devices 70 are electrically connected to each other via the terminals 91a of the adapter 91 (see FIG. 15 and FIG. 13). As illustrated in FIG. 8, a cable B is connected to the cradle 10. The cable B may be connected to the cradle 10 between the left and right front support walls 11b.

It should be noted that, unlike the example illustrated in the drawing, the terminal parts 12 may be configured to be directly and electrically connected to the terminals 71a of the grips 71. That is, the terminal parts 12 may be configured to be connected to the terminals 71a of the grips 71 without the adapter 91 being used.

As illustrated in FIG. 3, the magnet 12b may have, for example, an annular shape surrounding the plurality of terminals 12a. In addition, the magnet 12b may be exposed from the surface of the cradle 10 (the surface of the terminal part 12). Accordingly, the magnetic force generated between the magnet 12b and the magnetic body 91b can be sufficiently secured. In addition, as illustrated in FIG. 13, a gap may be secured between the magnet 12b and the magnetic body 91b. Accordingly, the input devices 70 can be smoothly removed from the cradle 10 as compared with a structure in which the magnet 12b and the magnetic body 91b come into contact with each other.

As illustrated in FIG. 3, a guide surface 11e is formed on the rear support wall 11a to guide the rear parts of the grips 71. The guide surface 11e is inclined in such a manner as to face outward in the left-right direction. That is, the guide surface 11e provided on the rear support wall 11a on the right side is inclined in such a manner as to face obliquely upward and to the right. In contrast, the guide surface 11e provided on the rear support wall 11a on the left side is inclined so as to face obliquely upward and to the left. The terminal part 12 is formed on the guide surface 11e. The terminal part 12 is inclined in such a manner as to face upward and outward in the left-right direction, similarly to the guide surfaces 11e.

Accordingly, the input devices 70 can be mounted on the cradle 10 with a slightly inclined posture, thus allowing smooth attaching/detaching work of the input devices 70. In addition, the weight of the input devices 70 can be received by the curved side support walls 11c. As a result, the support posture of the input devices 70 can be stabilized.

As illustrated in FIG. 3 and FIG. 13, the rear support wall 11a has a guide wall 11f extending further upward from the guide surface 11e. When the rear part of the grip 71 is mounted on the terminal part 12, the guide wall 11f stands along the rear surface of the grip 71. The guide wall 11f facilitates the work of arranging the rear part of the grip 71 on the guide surface 11e and the terminal part 12. It should be noted that, when the input devices 70 are placed on the cradle 10, the terminal parts 12 support the grips 71 and the guide surfaces 11e need not be in contact with the rear parts of the grips 71. Unlike this, the guide surfaces 11e may be brought into contact with the rear parts of the grips 71.

As illustrated in FIG. 3, a recessed part 11g is formed in the guide surface 11e. The terminal part 12 is formed inside the recessed part 11g. According to this structure, it is possible to prevent devices (for example, mobile phones) other than the input devices 70 from being connected to the terminal parts 12 and being charged.

The recessed part 11g is opened not only upward but also forward. In other words, although a protruding part or wall is formed on the left side, the right side, and the rear side of the terminal part 12, such a protruding part and the like are not formed on the front side of the terminal part 12. According to this shape, when the input devices 70 are to be removed from the cradle 10, the adapter 91 can be restrained from getting caught in the rear support walls 11a, and the removal work of the input devices 70 can be smoothly performed.

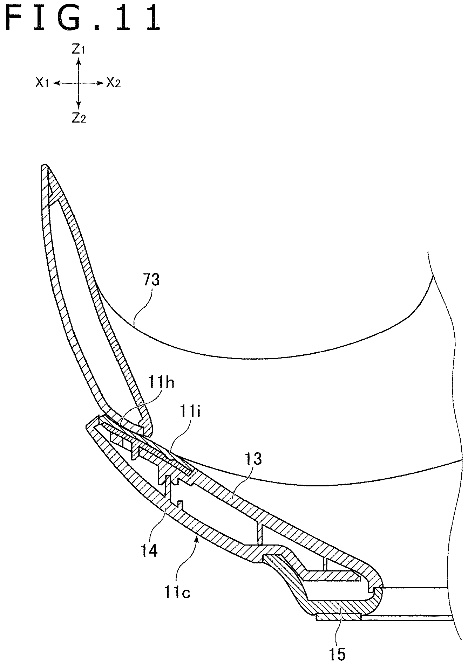

As illustrated in FIG. 11, each side support wall 11c of the cradle right part 10R and the cradle left part 10L has a support surface 11h extending along the upper edge thereof. The support surface 11h is inclined in such a manner as to be lowered toward the inside of the cradle 10. In the example illustrated in the drawing, the support surface 11h of the cradle right part 10R is inclined in such a manner as to be lowered toward the point X1 (see FIG. 2) defined to the right with respect to the center line C1. Meanwhile, the support surface 11h of the cradle left part 10L is inclined in such a manner as to be lowered toward the point X2 (see FIG. 2) defined to the left with respect to the center line C1. The edges of the tracked parts 72 and 73 are brought into contact with the support surface 11h. The inclination of the support surface 11h can prevent displacement of the input devices 70 to the outside in the left-right direction.

As illustrated in FIG. 2, the side support walls 11c are curved in an arc shape in plan view of the cradle 10. The support surfaces 11h are brought into contact with the tracked parts 72 and 73 over an angular range larger than 90 degrees in circumferences with the points X1 and X2 (see FIG. 2) at the centers. Accordingly, the positions of the input devices 70 can be more stabilized.

The side support walls 11c have no portions extending upward beyond the support surfaces 11h. Therefore, the outer surfaces of the tracked parts 72 and 73 are not covered by the side support walls 11c. The upper edges of the side support walls 11c may extend substantially along a horizontal surface in side view of the cradle 10.

As illustrated in FIG. 11, a cushion layer 11i may be provided in the side support wall 11c. The surface of the cushion layer 11i may function as the support surface 11h. According to this, the surfaces of the input devices 70 can be protected by the cushion layer 11i. The cushion layer 11i includes a material softer than those of the other parts of the side support wall 11c. For example, the side support wall 11c includes, for example, engineer plastic (for example, acrylonitrile-butadiene-styrene (ABS) resin). Meanwhile, the cushion layer 11i includes, for example, elastomer. The cushion layer 11i may include rubber.

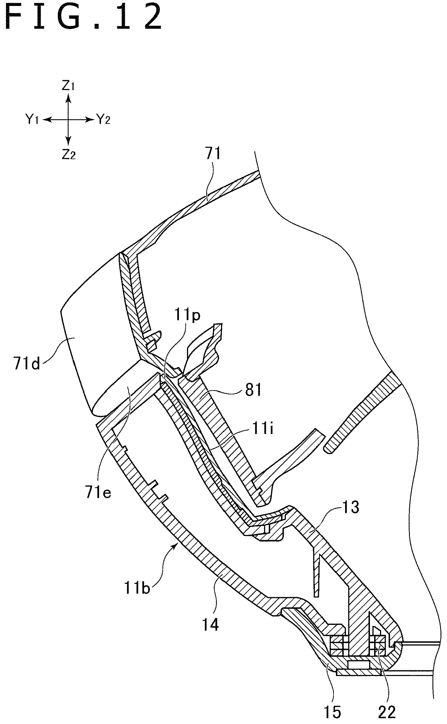

As illustrated in FIG. 12 and FIG. 13, the cushion layer 11i may also be provided on the guide surface 11e of the rear support wall 11a and a guide recessed part 11j, to be described later, of the front support wall 11b. As illustrated in FIG. 2, the cushion layer 11i may have an arc or annular shape extending from the front support wall 11b to the rear support wall 11a (the patterned area in FIG. 2 represents the cushion layer 11i).

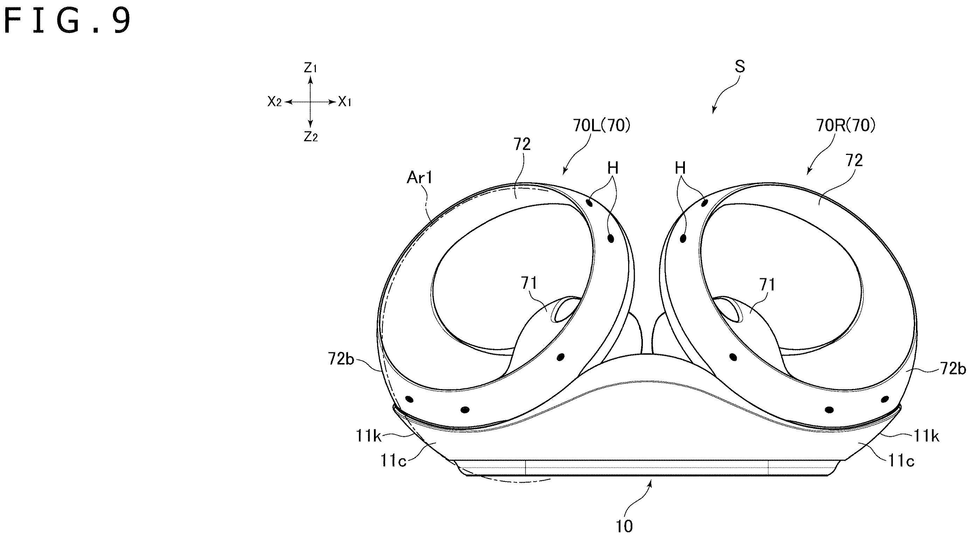

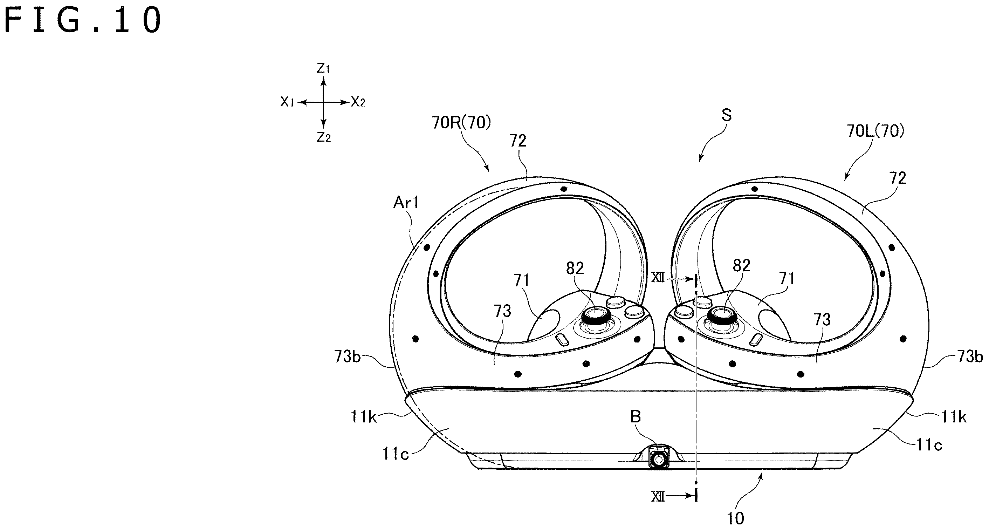

As illustrated in FIG. 9 and FIG. 10, outer surfaces 11k of the side support walls 11c are inclined in such a manner as to spread upward and outward in the left-right direction. In addition, when the input devices 70 are viewed from the front or rear, outer surfaces 72b and 73b of the side parts of the tracked parts 72 and 73 extend upward and outward in the left-right direction. Accordingly, a visual sense of unity of the cradle 10 and the input devices 70 is increased, making it possible to make the cradle 10 less noticeable.

The outer surfaces 11k of the side support walls 11c and the outer surfaces 72b and 73b of the tracked parts 72 and 73 may be curved along a common arc Ar1 (FIG. 9 and FIG. 10). Accordingly, a visual sense of unity of the cradle 10 and the input devices 70 can be further increased. These may be arranged substantially on one surface.

As illustrated in FIG. 8, a front surface 11m of the front support wall 11b is inclined in such a manner as to spread upward and forward. In addition, when the cradle 10 and the input devices 70 are viewed from the side, the front surfaces of the input devices 70 (front surface 71d of the grips 71) also extend upward and forward. Accordingly, a visual sense of unity of the cradle 10 and the input devices 70 is increased, making it possible to make the cradle 10 less noticeable.

The front surface 11m of the front support wall 11b and the front surface 71d of the grip 71 may be curved along a common arc Ar2. Accordingly, a visual sense of unity of the cradle 10 and the input devices 70 can be further increased. These may be arranged substantially on one surface.

As illustrated in FIG. 8, a rear surface 11n of the rear support wall 11a may also be inclined in such a manner as to spread upward and rearward. When the cradle 10 and the input devices 70 are viewed from the side, a lower surface (rear surface) 72c of the lower part of the input device 70 may also extend upward and rearward. Accordingly, a visual sense of unity of the cradle 10 and the input devices 70 can be further increased.

As illustrated in FIG. 12, the front support wall 11b of the cradle 10 is formed in such a manner as to cover the front side of the trigger button 81 arranged on the front side of the grip 71. Guide recessed parts 11j (see FIG. 1) are formed on the front support walls 11b to avoid interference with the trigger button 81. When the input devices 70 are arranged on the cradle 10, the front support walls 11b do not come into contact with the trigger button 81. Accordingly, it is possible to suppress unnecessary load from acting on the trigger button 81.

In addition, when the input devices 70 are arranged on the cradle 10, the grips 71 need not come into contact with the front support walls 11b. More specifically, as illustrated in FIG. 12, a small gap may be formed between the upper side (a lower edge 71e of the front surface 71d of the grip 71) of the edge of the opening where the trigger button 81 is arranged and an upper edge 11p (see FIG. 1) of the front support wall 11b. When the input devices 70 are arranged on the cradle 10, the input devices 70 may be supported only by the rear support walls 11a and the side support walls 11c.

When the input devices 70 slightly move on the cradle 10 and the tracked parts 72 and 73 slightly float from the side support walls 11c, the lower edges 71e of the front surfaces 71d of the grips 71 are supported by the upper edges 11p of the front support walls 11b.

As illustrated in FIG. 1, each of the guide recessed parts 11j has a guide surface 11q formed along an edge 81a (see FIG. 14) of the trigger button 81. The guide surface 11q is formed in such a manner as to surround the right edge, the left edge, and the lower edge of the trigger button 81. When the input devices 70 are arranged on the cradle 10, a gap may also be secured between the guide surface 11q and the trigger button 81. When the input devices 70 are to be arranged on the cradle 10, the guide surface 11q guides the position of the trigger button 81.

When the input devices 70 are to be arranged on the cradle 10, first, the rear parts of the grips 71 are arranged on the rear support walls 11a. At this time, the terminals 71a are electrically connected to the terminal parts 12 of the cradle 10 via the adapters 91. In addition, the trigger buttons 81 are arranged in the guide recessed parts 11j. At this time, the positions of the trigger buttons 81 are guided by the guide surfaces 11q. When the user releases his/her hands from the grips 71, the input devices 70 are inclined outward in the left-right direction by its own weight, and the tracked parts 72 and 73 are supported on the side support walls 11c. Meanwhile, a small gap is secured between the lower edge 71e of the front surface 71d of the grip 71 (see FIG. 12) and the upper edge of the front support wall 11b.

The front support walls 11b and the rear support walls 11a are formed such that the grips 71 are obliquely arranged when the cradle 10 and the input devices 70 are viewed in plan view. Specifically, the front support walls 11b and the rear support walls 11a are formed such that the distance between the grips 71 of the left and right input devices 70 increases toward the rear.

For example, as illustrated in FIG. 2, the terminal parts 12 formed on the rear support walls 11a are positioned on the outer sides in the left-right direction than the guide recessed parts 11j formed in the front support walls 11b. That is, in the cradle right part 10R, the terminal part 12 is positioned to the right with respect to the guide recessed part 11j. In the cradle left part 10L, the terminal part 12 is positioned to the left with respect to the guide recessed part 11j. Such arrangement of the front support walls 11b and the rear support walls 11a allows the user to smoothly arrange the left and right input devices 70 on the cradle 10 or to remove the left and right input devices 70 from the cradle 10 while holding the grips 71 of the left and right input devices 70.

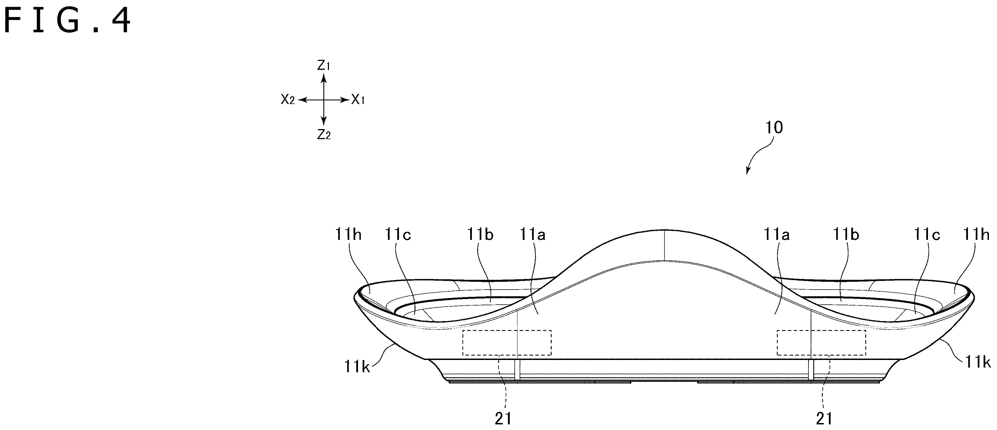

The cradle 10 may incorporate a weight. The weight may be, for example, one or more metal plates. The cradle 10 includes an inner case 13 (see FIG. 11) configuring the inner surfaces of the support walls 11a, 11b, and 11c and an outer case 14 (see FIG. 11) configuring the outer surfaces of the support walls 11a, 11b, and 11c. The weights 21 (see FIG. 4) may be arranged between the cases 13 and 14. The weights 21 may be arranged such that, for example, the rear part of the cradle 10 is heavier than the front part. In this way, the terminals 71a of the input devices 70 which are attracted to the terminal part 12 by magnetic force can be smoothly removed from the cradle 10.

In addition, the cradle 10 may have a bottom case 15 (see FIG. 11). For example, an annular weight 22 may also be arranged in the bottom case 15.

## Claims

1. A cradle (10) for supporting input devices (70) of a predetermined kind, the input devices (70) of the predetermined kind including an input device (70R) for a right hand and an input device (70L) for a left hand, the input devices having a symmetrical external shape, each of the input devices having grips (71) with operation members on an upper part, and each of the input devices having an annular or arc-shaped rear tracked part (72), wherein the grip (71) is positioned inside the rear tracked part (72), and each of the input devices having a side tracked part (73) extending from the grip (71),
the cradle (10) comprising:
a cradle right part (10R) that includes a rear support part (11a) for supporting the rear part of the input device (70R) for the right hand and a side support part (11c) outside in the right direction for supporting the right-hand portion of the annular or arc-shaped tracked part (72) of the input device (70R) for the right hand;
a cradle left part (10L) that includes a rear support part (11b) for supporting the rear part of the input device (70L) for the left hand and a side support part (11c) outside in the left direction for supporting the left-hand portion of the annular or arc-shaped tracked part (72) of the input device (70L) for the left hand;
the cradle right and left parts including front support parts (11b) that are positioned forward away from the rear support parts (11a, 11b) and are capable of supporting front parts of the grips (71) of the input devices (70).

2. The cradle (10) according to claim 1,
wherein a recessed part (E) of the cradle (10) is formed between the rear support parts (11a) and the front support parts (11b), the recessed part (E) for positioning the grips (71) inside of it in plan view.

3. The cradle (10) according to claim 2,
wherein an opening (11d) is formed at a bottom part of the recessed part (E) of the cradle (10).

4. The cradle (10) according to any one of claims 1 to 3,
wherein the side support parts (11c) connect the rear support parts (11a) to the front support parts (11b), and are curved in such a manner as to swell outward in the left-right direction in plan view of the cradle (10).

5. The cradle (10) according to any one of claims 1 to 4,
wherein the side support parts (11c) have support surfaces inclined in such a manner as to be lowered toward a center in the left-right direction.

6. The cradle (10) according to claims any one of claims 1 to 5,
wherein the rear support parts (11a) and the front support parts (11b) are formed such that the grips (71) are obliquely arranged in plan view of the input devices (70) and the cradle (10).

7. The cradle (10) according to claims any one of claims 1 to 6,
wherein the cradle right part (10R) and the cradle left part (10L) are annular as a whole.

8. A system (S) comprising:
a cradle (10) according to any one of claims 1 to 7; and
the input devices, according to claim 1 (70).

## Patentansprüche

1. Schale (10) zum Tragen von Eingabevorrichtungen (70) einer zuvor bestimmten Art, wobei die Eingabevorrichtungen (70) der zuvor bestimmten Art eine Eingabevorrichtung (70R) für eine rechte Hand und eine Eingabevorrichtung (70L) für eine linke Hand einschließen, wobei die Eingabevorrichtungen eine symmetrische äußere Form aufweisen, wobei jede der Eingabevorrichtungen Griffe (71) mit Betätigungselementen an einem oberen Teil aufweist und jede der Eingabevorrichtungen ein ringartiges oder bogenförmiges hinteres nachverfolgtes Teil (72) aufweist, wobei der Griff (71) innerhalb des hinteren nachverfolgten Teils (72) positioniert ist und wobei jede der Eingabevorrichtungen ein seitliches nachverfolgtes Teil (73) aufweist, das sich von dem Griff (71) erstreckt, die Schale (10) umfassend:
ein rechtes Teil (10R) der Schale, das ein hinteres Trägerteil (11a) zum Tragen des hinteren Teils der Eingabevorrichtung (70R) für die rechte Hand und ein seitliches Trägerteil (11c) außen in der rechten Richtung zum Tragen des rechtsseitigen Abschnitts des ringartigen oder bogenförmigen nachverfolgten Teils (72) der Eingabevorrichtung (70R) für die rechte Hand einschließt;
ein linkes Teil (10L) der Schale, das einen hinteren Trägerteil (11b) zum Tragen des hinteren Teils der Eingabevorrichtung (70L) für die linke Hand und einen seitlichen Trägerteil (11c) außen in der linken Richtung zum Tragen des linksseitigen Abschnitts des ringartigen oder bogenförmigen nachverfolgten Teils (72) der Eingabevorrichtung (70L) für die linke Hand einschließt;
wobei das rechte und das linke Teil der Schale vordere Trägerteile (11b) einschließen, die nach vorne weg von den hinteren Trägerteilen (11a, 11b) positioniert sind und zum Tragen der vorderen Teile der Griffe (71) der Eingabevorrichtungen (70) imstande sind.

2. Schale (10) nach Anspruch 1,
wobei ein vertieftes Teil (E) der Schale (10) zwischen den hinteren Trägerteilen (11a) und den vorderen Trägerteilen (11b) ausgebildet ist, wobei das vertiefte Teil (E) zum Positionieren der Griffe (71) im Innerem davon in einer Draufsicht dient.

3. Schale (10) nach Anspruch 2,
wobei eine Öffnung (11d) an einem unteren Teil des vertieften Teils (E) der Schale (10) ausgebildet ist.

4. Schale (10) nach einem der Ansprüche 1 bis 3,
wobei die seitlichen Trägerteile (11c) die hinteren Trägerteile (11a) mit den vorderen Trägerteilen (11b) verbinden und in einer derartigen Weise gekrümmt sind, dass sie in der Links-Rechts-Richtung in der Draufsicht der Schale (10) nach außen anschwellen.

5. Schale (10) nach einem der Ansprüche 1 bis 4,
wobei die seitlichen Trägerteile (11c) Trägeroberflächen aufweisen, die in einer derartigen Weise geneigt sind, dass sie zu einer Mitte hin in der Links-Rechts-Richtung abgesenkt sind.

6. Schale (10) nach einem der Ansprüche 1 bis 5,
wobei die hinteren Trägerteile (11a) und die vorderen Trägerteile (11b) derart ausgebildet sind, dass die Griffe (71) in der Draufsicht der Eingabevorrichtungen (70) und der Schale (10) schräg angeordnet sind.

7. Schale (10) nach einem der Ansprüche 1 bis 6,
wobei das reche Teil (10R) der Schale und das linke Teil (10L) der Schale als ein Ganzes ringartig sind.

8. System (S), umfassend:
eine Schale (10) nach einem der Ansprüche 1 bis 7; und
die Eingabevorrichtungen nach Anspruch 1 (70).

## Revendications

1. Socle (10) permettant de supporter des dispositifs d'entrée (70) d'un type prédéterminé, les dispositifs d'entrée (70) du type prédéterminé comportant un dispositif d'entrée (70R) pour une main droite et un dispositif d'entrée (70L) pour une main gauche, les dispositifs d'entrée ayant une forme externe symétrique, chacun des dispositifs d'entrée ayant des poignées (71) avec des éléments de fonctionnement sur une partie supérieure, et chacun des dispositifs d'entrée ayant une partie suivie arrière (72) annulaire ou en forme d'arc, dans lequel la poignée (71) est positionnée à l'intérieur de la partie suivie arrière (72), et chacun des dispositifs d'entrée ayant une partie suivie latérale (73) s'étendant à partir de la poignée (71), le socle (10) comprenant :
une partie droite de socle (10R) qui comporte une partie de support arrière (11a) permettant de supporter la partie arrière du dispositif d'entrée (70R) pour la main droite et une partie de support latéral (11c) à l'extérieur dans la direction droite permettant de supporter la portion de main droite de la partie suivie (72) annulaire ou en forme d'arc du dispositif d'entrée (70R) pour la main droite ;
une partie gauche de socle (10L) qui comporte une partie de support arrière (11b) permettant de supporter la partie arrière du dispositif d'entrée (70L) pour la main gauche et une partie de support latéral (11c) à l'extérieur dans la direction gauche permettant de supporter la portion de main gauche de la partie suivie (72) annulaire ou en forme d'arc du dispositif d'entrée (70L) pour la main gauche ;
les parties droite et gauche de socle comportant des parties de support avant (11b) qui sont positionnées vers l'avant à l'écart des parties de support arrière (11a, 11b) et sont capables de supporter des parties avant des poignées (71) des dispositifs d'entrée (70).

2. Socle (10) selon la revendication 1,
dans lequel une partie évidée (E) du socle (10) est formée entre les parties de support arrière (11a) et les parties de support avant (11b), la partie évidée (E) permettant de positionner les poignées (71) à l'intérieur de celle-ci en vue en plan.

3. Socle (10) selon la revendication 2,
dans lequel une ouverture (11d) est formée au niveau d'une partie inférieure de la partie évidée (E) du socle (10).

4. Socle (10) selon l'une quelconque des revendications 1 à 3,
dans lequel les parties de support latéral (11c) relient les parties de support arrière (11a) aux parties de support avant (11b), et sont courbées de manière à se gonfler vers l'extérieur dans la direction gauche-droite en vue en plan du socle (10).

5. Socle (10) selon l'une quelconque des revendications 1 à 4,
dans lequel les parties de support latéral (11c) ont des surfaces de support inclinées de manière à être abaissées en direction d'un centre dans la direction gauche-droite.

6. Socle (10) selon l'une quelconque des revendications 1 à 5,
dans lequel les parties de support arrière (11a) et les parties de support avant (11b) sont formées de telle sorte que les poignées (71) sont agencées en oblique en vue en plan des dispositifs d'entrée (70) et du socle (10).

7. Socle (10) selon l'une quelconque des revendications 1 à 6,
dans lequel la partie droite de socle (10R) et la partie gauche de socle (10L) sont annulaires dans l'ensemble.

8. Système (S) comprenant :
un socle (10) selon l'une quelconque des revendications 1 à 7 ; et
les dispositifs d'entrée, selon la revendication 1 (70).
